Europäisches Patentamt

European Patent Office

Office européen des brevets

(19)

(11) Publication number: **0 078 587**
A1

# EUROPEAN PATENT APPLICATION

(21) Application number: **82201388.4**

(22) Date of filing: **04.11.82**

(51) Int. Cl.³: **A 23 N 7/02, A 23 N 7/00**

(30) Priority: **04.11.81 NL 8104982**

(43) Date of publication of application: **11.05.83**
**Bulletin 83/19**

(84) Designated Contracting States: **AT BE CH DE FR GB IT LI LU NL SE**

(71) Applicant: **Florigo Industrie B.V., Industrieterrein Honthorst Edisonweg 10, NL-3442 AC Woerden (NL)**

(72) Inventor: **Hak, Jan, Voorstraat 4, NL-4286 AL Almkerk (NL)**
Inventor: **Hamm, Paul Lodewijk Arie, Kroonstraat 21, NL-1724 RL Oudkarspel (NL)**

(74) Representative: **Jacobson, Gerard et al, Octrooibureau Los en Stigter B.V. Postbus 20052, NL-1000 HB Amsterdam (NL)**

(54) Apparatus for steam peeling agricultural products, such as potatoes and the like.

(57) The invention relates to an apparatus for steam peeling agricultural products, such as potatoes and the like, provided with a treatment vessel (1), which has a filling opening adapted to be closed, which treatment vessel (1) is rotatable about a transverse axis (3) and is journalled by means of two bearing studs (4, 5) connected with the treatment vessel (1), while this treatment vessel (1) may be brought into rotation by a drive means, a steam inlet (7) and outlet (21) being connected with the treatment vessel. (1)

According to the invention a condensate-receiving mouthpiece (20) is accommodated in the treatment vessel (1) which mouthpiece (20) is connected with a condensate-discharge conduit, (21) which is passed through one fo the bearing studs (4, 5) to the outside of the treatment vessel, (1) a valve (27) being received in the condensate-discharge conduit (21) outside the treatment vessel. (1)

Eur-55/10-Jb/cs

- 1 -

0078587

Apparatus for steam peeling agricultural products,
such as potatoes and the like.

The invention relates to an apparatus for steam peeling agricultural products, such as potatoes and the like, provided with a treatment vessel, which has a filling opening adapted to be closed, which treatment vessel is rotatable about a transverse axis and is journalled by means of two bearing studs connected with the treatment vessel, while this treatment vessel may be brought into rotation by a drive means, a steam inlet and outlet being connected with the treatment vessel.

In known embodiments of such steam peelers the disadvantage occurs, that the hot condensate formed in the treatment vessel remains adhered to the treated products and penetrates therein, so that the outer layer of these products becomes softer, and the layer of the products which is very rich in vitamines and which is positioned immediately underneath the peel is removed simultaneously with the peel. This also causes a loss of weight of the peeled products.

It is an object of the present invention to construct an apparatus of the type as mentioned hereinabove in such manner, that this disadvantage is removed in an effective way.

For this purpose the apparatus according to the invention is characterized in that a condensate receiving mouthpiece is accommodated in the treatment vessel, which mouthpiece is connected with a condensate-discharge conduit, which is passed through one of the bearing studs to the outside of the treatment vessel, a valve being received in the condensate-discharge conduit outside the treatment vessel.

When the valve is opened the condensate formed in the treatment vessel may be removed through the condensate-receiving mouthpiece and the condensate-discharge conduit under the influence of the pressure of the steam in the treatment vessel, which removal preferably takes place just before the steam is discharged from the treatment vessel.

In an apparatus, wherein the steam inlet and outlet is connected in a known manner to a central bore in one of the bearing studs, according to the invention the condensate-discharge conduit may be passed through the same bearing stud.

With advantage the mouth of the condensate-receiving mouthpiece may adjoin the treatment vessel and may be positioned at the front side of the condensate-receiving mouthpiece in the direction of rotation of the treatment vessel.

In order to be able to use the condensate-receiving mouthpiece also for the discharge of air present in the treatment vessel as well as in the products supplied therein, in order to improve the action of the steam on the products and thus the peeling effect aimed at, according to the invention the condensate-receiving mouthpiece may be positioned in the treatment vessel at the same side of its axis of rotation as the filling opening.

In this way it becomes possible, after a charge of products is supplied into the treatment vessel through the filling opening and the filling opening has been closed, to supply steam to the treatment vessel and to open the valve in the condensate-discharge conduit for a short period of time. In this way, the air which is lighter than steam and which will therefore be present in the upper portion of the treatment vessel, as well as air which may be present in the supplied products, is removed by the steam from the treatment vessel. Hereafter the valve in the condensate-discharge conduit may be closed again and the treatment vessel may be brought into rotation.

A favourable embodiment of the apparatus according to the invention, wherein the central bore in one of the bearing studs is connected with a steam outlet channel formed on the wall of the treatment vessel, which steam outlet channel is connected with the interior of the treatment vessel through perforated wall portions, is characterized in that the central bore in the relative bearing stud debouches in the middle of a U-shaped distributing channel, which extends along approximately half the circumference of the treatment vessel, the two open ends of this distributing channel debouching into the steam outlet channel provided with the perforated wall portions, which steam outlet channel is also U-shaped and extends along the central part of the bottom wall positioned opposite the filling opening and along upstanding wall portions of the treatment vessel which lie diametrically opposite one another, to and beyond the transverse plane through the axis of rotation of the treatment vessel, the centerlines of the steam outlet channel being positioned in a central longitudinal plane of the treatment vessel.

The invention will hereafter be elucidated with reference to the drawing, which shows an embodiment by way of example of an apparatus according to the invention for steam peeling agricultural products.

Fig. 1 is a front view, partly in cross-section, of an embodiment of an apparatus according to the invention for steam peeling agricultural products, wherein a portion of the wall of the treatment vessel has been broken away.

Fig. 2 is a cross-section along the plane II-II in fig. 1.

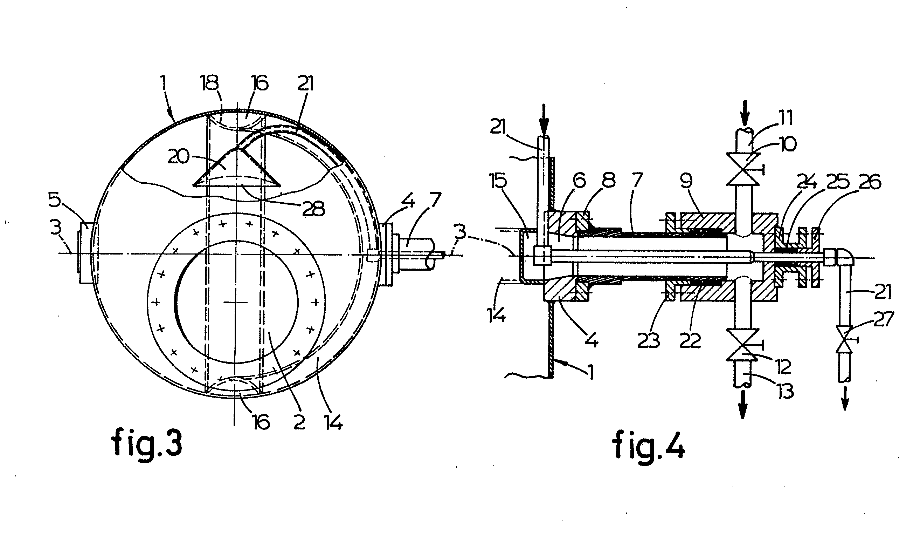

Fig. 3 is a top view of the apparatus according to figs. 1 and 2, wherein a portion of the wall of the treatment vessel has been broken away.

Fig. 4 shows a portion of the apparatus according to figs. 1, 2 and 3 in cross-section at a larger scale.

The drawing shows an embodiment by way of example of an apparatus according to the invention for steam peeling agricultural products, such as potatoes, carrots and the like.

This apparatus is provided with a treatment vessel 1, which has a filling opening at one side, which may be closed by means of a cover 2 or a flap, after a load of the agricultural products to be treated is supplied into the interior of the treatment vessel 1.

The treatment vessel 1 is rotatable about a transverse axis 3 and is journalled by means of two bearing studs 4, 5 positioned diametrically opposite one another. By means of a drive (not shown) the treatment vessel 1 may be rotated about the transverse axis 3.

The steam peeling takes place by bringing the agricultural products in the treatment vessel 1 in contact with steam under pressure during some time, whereafter the steam pressure is decreased abruptly and the peel of the products will become loose. This steam supply and steam discharge takes place through a central bore 6 in the bearing stud 4.

0078587

This bearing stud 4 is connected to a pipe member 7 outside the treatment vessel 1 by means of a flange 8. The opposite end of this pipe member 7 is rotatably journalled in a stationary steam inlet and outlet housing 9 in a sealed manner, a steam inlet pipe 11 provided with a valve 10, as well as a steam outlet pipe 13 provided with a valve 12 being connected to this housing.

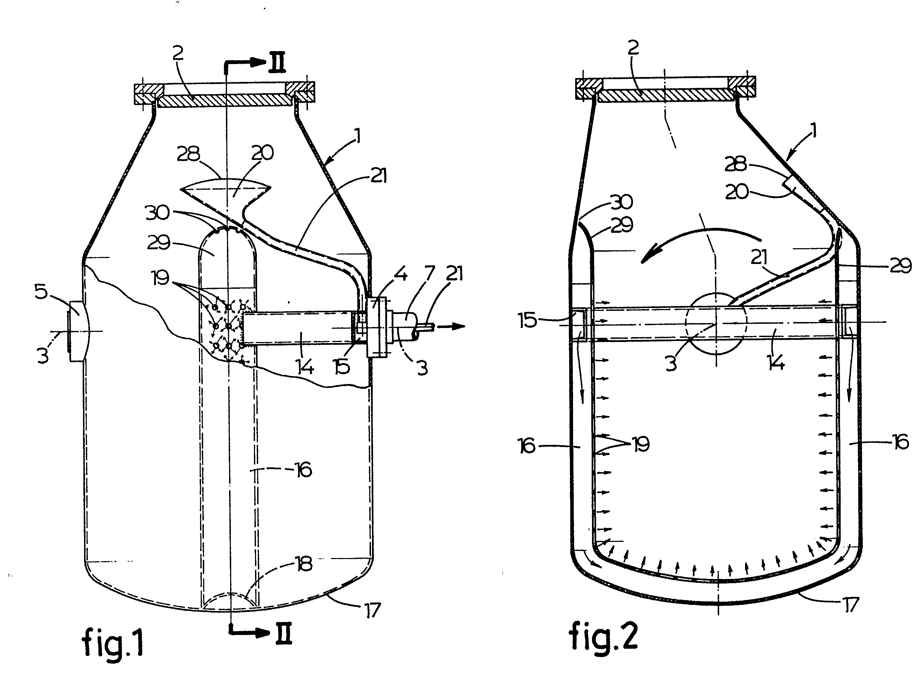

As particularly shown in figs.1 and 2 the central bore 6 in the bearing stud 4 debouches in the middle of a U-shaped distributing channel 14, which extends approximately horizontally along slightly less than half the circumference of the treatment vessel 1.

In the embodiment shown by way of example, the U-shaped distributing channel 14 is formed by a U-section 15, which is mounted on the wall of the treatment vessel 1, so that the distributing channel 14 is partly formed by the wall of the treatment vessel 1.

The U-shaped distributing channel 14 debouches with both its open ends into a steam outlet channel 16, which is likewise U-shaped and which extends along the central part of the bottom wall 17 positioned opposite the filling opening and along upstanding wall portions of the treatment vessel 1, which lie diametrically opposite one another, to and beyond the horizontal transverse plane through the axis of rotation 3. The centerlines of the steam outlet channel 16 are positioned in a central longitudinal plane of the treatment vessel 1.

In the embodiment shown by way of example the steam outlet channel 16 is formed by a bent section 18, which is mounted on the wall of the treatment vessel 1, so that this steam outlet channel 16 is partly formed by the wall of the treatment vessel 1.

As shown in figs. 1 and 2 the bent section 18 is provided with perforations 19 over the greatest part of its length, the steam outlet channel 16 being connected with the interior of the treatment vessel 1 through these perforations. The position of the U-shaped steam outlet channel 16 with respect to the axis of rotation 3 is particularly favourable, as the perforations 19 will again and again come free from the treated products during the rotation, which accelerates the steam supply and steam discharge.

- 5 -

0078587

Further a condensate-receiving mouthpiece 20 is accommodated in the treatment vessel 1 and is connected with a condensate-discharge conduit 21, which is passed through the bearing stud 4 to the outside of the treatment vessel 1.

As shown in fig. 4 the condensate-discharge conduit 21, after having passed the central bore 6 in the bearing stud 4, passes the pipe member 7, whereafter it is passed in a sealed manner and rotatably through the steam inlet and outlet housing 9.

A stuffing box is formed at the side of the steam inlet and outlet housing 9, which is directed towards the treatment vessel 1, in which stuffing box packing 22 is brought into sealing engagement with the relative end of the pipe member 7 by means of a packing gland 23 mounted at this side of the steam inlet and outlet housing 9.

At the opposite side of the steam inlet and outlet housing 9 another stuffing box is formed in an extension member 24, in which stuffing box packing 25 is brought into sealing engagement with the condensate-discharge conduit 21 by means of a packing gland 26 mounted at this side of the steam inlet and outlet housing 9.

Furthermore a valve 27 is received in the condensate-discharge conduit 21, beyond the packing gland 26.

The mouth 28 of the condensate-receiving mouthpiece 20 adjoins the treatment vessel 1 and lies at the front side of the condensate-receiving mouthpiece 20 in the direction of rotation of the treatment vessel 1, which is indicated in fig. 2 with an arrow.

Furthermore the condensate-receiving mouthpiece 20 is positioned in the treatment vessel 1 at the same side of the transverse plane through the axis of rotation 3 as the filling opening, whilst as shown in fig. 1, the central longitudinal axis of the condensate-receiving mouthpiece 20 which is perpendicular to the mouth 28 of the condensate-receiving mouthpiece 20 is positioned in a central longitudinal plane of the treatment vessel 1. The condensate-receiving mouthpiece 20 is also partly formed by the wall of the treatment vessel 1.

The two end parts 29 of the steam outlet channel 16 positioned at the side of the filling opening are provided with perforations 30 at the rounded end only, whilst they are further unperforated. Therefore, condensate formed in the steam outlet channel 16 will leave this channel during the rotation of the treatment vessel 1 at the side of the condensate-receiving mouthpiece 20, which furthers the condensate discharge.

The apparatus as described for peeling agricultural products, such as potatoes, may be operated in several ways.

Preferably, after the treatment vessel 1 has been filled with the products to be peeled while the cover 2 is removed, whereby for instance a filling rate of 80% is applied, and after the cover 2 is closed again, the steam supply to the interior of the treatment vessel 1 will commence by opening the valve 10. The valve 27 in the condensate-dicharge conduit 24 is also opened for a short period of time, so that the air which is lighter than the steam and which is present in the upper portion of the treatment vessel 1, as well as air which may be present in the products, may be discharged through the condensate-receiving mouthpiece 20 under the influence of the steam.

Hereafter the valve 27 is closed again and the treatment vessel 1 is brought in rotation. Due to the location of the steam outlet channel 16 the steam comes into contact with the products to be treated in an extremely quick and intensive manner.

During the rotation of the treatment vessel 1 the condensate will be "scooped" as it were by the condensate-receiving mouthpiece 20 and will be fed to the condensate-discharge conduit 21. In order to improve the condensate discharge, the valve 27 is opened again - at any rate before the end of the steam peeling process - in order to blow the condensate away due to the pressure difference which occurs. The valve 27 has to be open during 1 - 1½ secs. only. Mostly the opening of the valve 27 will be effected just before the steam supply is ended and the steam discharge takes place.

As already stated hereinbefore, condensate which is formed in the steam outlet channel 16, is deposited near the condensate-receiving mouthpiece 20 through the perforations 30 at the ends of the closed end portions 29 of this steam outlet channel 16, which again furthers the condensate discharge.

Practically immediately after opening the valve 27 for the discharge of the condensate, the valve 10 in the steam supply conduit may be closed and the valve 12 in the steam discharge conduit may be opened, so that the pressure in the treatment vessel 1 practically immediately drops, in order to have the peeling take place.

Due to the fact that no warm condensate is present on the products, a thinner peel of the products is removed, so that both the food value and the weight of the peeled products are favourably influenced.

The invention is not restricted to the embodiment shown in the drawing by way of example, which may be varied in several ways within the scope of the invention.

- 8 -

0078587

<u>CLAIMS</u>

1. Apparatus for steam peeling agricultural products, such as potatoes and the like, provided with a treatment vessel, which has a filling opening adapted to be closed, which treatment vessel is rotatable about a transverse axis and is journalled by means of two bearing studs connected with the treatment vessel, while this treatment vessel may be brought into rotation by a drive means, a steam inlet and outlet being connected with the treatment vessel, c h a r a c- t e r i z e d  in that a condensate-receiving mouthpiece is accommodated in the treatment vessel, which mouthpiece is connected with a condensate-discharge conduit, which is passed through one of the bearing studs to. the outside of the treatment vessel, a valve being received in the condensate-discharge conduit outside the treatment vessel.

2. Apparatus according to claim 1, wherein the steam inlet and outlet is connected with a central bore in one of the bearing studs, c h a r a c t e r i z e d  in that the condensate-discharge conduit is passed through the same bearing stud.

3. Apparatus according to any one of the preceding claims, c h a r a c t e r i z e d  in that the mouth of the condensate-receiving mouthpiece adjoins the treatment vessel and is positioned at the front side of the condensate- receiving mouthpiece in the direction of rotation of the treatment vessel.

4. Apparatus according to any one of the preceding claims, c h a r a c t e r i z e d  in that the condensate- receiving mouthpiece is positioned in the treatment vessel at the same side of the axis of rotation as the filling opening.

5. Apparatus according to claim 3 or 4, c h a r a c- t e r i z e d  in that the central longitudinal axis of the condensate-receiving mouthpiece which is perpendicular to the mouth of this mouthpiece, is positioned in a central longitudinal plane of the treatment vessel.

6. Apparatus according to any one of claims 2 - 5, wherein the central bore in one of the bearing studs is connected with a steam outlet channel formed on the wall of the treatment vessel, which steam outlet channel is connected with the interior of the treatment vessel through perforated wall portions, c h a r a c t e r i z e d in that the central bore in the relative bearing stud debouches in the middle of a U-shaped distributing channel, which extends along approximately half the circumference of the treatment vessel, the two open ends of this distributing channel debouching into the steam outlet channel provided with the perforated wall portions, which steam outlet channel is also U-shaped and extends along the central part of the bottom wall positioned opposite the filling opening and along upstanding wall portions of the treatment vessel which lie diametrically opposite one another, to and beyond the transverse plane through the axis of rotation of the treatment vessel, the centerlines of the steam outlet channel being positioned in a central longitudinal plane of the treatment vessel.

7. Apparatus according to claim 6, c h a r a c- t e r i z e d in that the two end parts of the steam outlet channel positioned at the side of the filling opening are provided with perforations at the end only.

8. Apparatus according to any one of claims 2 - 7, c h a r a c t e r i z e d in that the bearing stud which is provided with the central bore is connected to a pipe member outside the treatment vessel, which pipe member is rotatably journalled with its opposite end in a stationary steam inlet and outlet housing in a sealed manner, a steam inlet pipe provided with a valve, as well as a steam outlet pipe provided with a valve being connected to said housing, while the condensate-discharge conduit passes through the pipe member and is rotatably passed through the steam inlet and outlet housing in a sealed manner.

9. Apparatus according to claim 8, c h a r a c- t e r i z e d in that a stuffing box is formed at the side of the steam inlet and outlet housing which is directed towards the treatment vessel, in which stuffing box packing is brought into sealing engagement with the relative end of the pipe member by means of a packing gland mounted at this side of the steam inlet and outlet housing, while at the opposite side of the steam inlet and outlet housing another stuffing box is formed, in which stuffing box packing is brought into sealing

0078587

engagement with the condensate-discharge conduit by means of a packing gland mounted at this side of the steam inlet and outlet housing.

10. Apparatus according to any one of the preceding claims, c h a r a c t e r i z e d  in that the condensate-receiving mouthpiece is partly formed by the wall of the treatment vessel.

11. Apparatus according to any one of claims 6 - 10, c h a r a c t e r i z e d  in that the distributing channel and the steam outlet channel are partly formed by the wall of the treatment vessel.

12. Apparatus according to any one of claims 6 - 11, c h a r a c t e r i z e d  in that the distributing channel is formed by a U-section, which is mounted on the wall of the treatment vessel.

13. Apparatus according to any one of claims 7 - 12, c h a r a c t e r i z e d  in that both ends of the steam outlet channel are rounded.

14. Method for the operation of an apparatus according to any one of the preceding claims, c h a r a c t e r i z e d in that the valve in the condensate-discharge conduit is opened for a short time, in order to blow off the condensate by means of the occurring pressure difference.

15. Method according to claim 14, c h a r a c t e r-i z e d  in that opening of the valve takes place just before the steam is discharged from the treatment vessel.

fig.1

fig.2

0078587

fig.3

fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | A 23 N 7/02 |
| X | DE-A-2 516 447 (P.KUNZ) <br> *Page 7, paragraph 3; figure 3* | 1 | A 23 N 7/00 |
| | --- | | |
| A | FR-A-2 366 805 (MACHINEFABRIEK B.V.) <br> *Page 10, lines 18-24; figure 6* | 1 | |
| | --- | | |
| A | DE-A-2 641 350 (P.KUNZ) | | |
| | --- | | |
| A | WO-A-8 101 497 (P.KUNZ) | | |
| | ----- | | |

**TECHNICAL FIELDS SEARCHED (Int. Cl. ³)**

A 23 N
A 23 P

The present search report has been drawn up for all claims

| Place of search | Date of completion of the search | Examiner |
|---|---|---|
| THE HAGUE | 26-01-1983 | NEHRDICH H.J |